# EUROPÄISCHE PATENTSCHRIFT

(11) **EP 3 635 176 B1**
(45) Veröffentlichungstag und Bekanntmachung des Hinweises auf die Patenterteilung: **17.11.2021**
(21) Anmeldenummer: 18705813.6
(22) Anmeldetag: 12.02.2018
(51) Int. Cl.: E01C 7/00, B28B 1/00, E01C 19/48, B33Y 30/00

(54) **VERFAHREN ZUR HERSTELLUNG EINER PFLASTERFLÄCHE**
METHOD FOR PRODUCING A PAVING AREA
PROCÉDÉ DE RÉALISATION D'UNE SURFACE PAVÉE

(30) Priorität: 06.06.2017 AT 600462017
(43) Veröffentlichungstag der Anmeldung: 15.04.2020
(73) Patentinhaber: Printstones GmbH, 1100 Wien (AT)
(72) Erfinder: HENGL, Herwig, 1070 Wien (AT); KESKIN, Hüseyin, 1030 Wien (AT); BRENNER, Markus, 1130 Wien (AT)
(74) Vertreter: SONN Patentanwälte OG
(86) Internationale Anmeldenummer: PCT/AT2018/060038
(87) Internationale Veröffentlichungsnummer: WO 2018/223164

(56) Entgegenhaltungen:
- WO-A1-95/14821
- US-A1- 2014 374 933

## Beschreibung

Die Erfindung betrifft ein Verfahren zur Herstellung einer Pflasterfläche aus Pflasterelementen, insbesondere aus Pflastersteinen oder Pflasterplatten.

Pflasterelemente sind Bestandteile eines Pflasters bzw. eines Pflasterbelags, wobei darunter ein Belag für Verkehrsflächen im Straßen- und Wegebau zu verstehen ist. Beim Stand der Technik liegen die Pflasterelemente in einer Pflasterbettung. Darunter befindet sich zumindest eine Tragschicht, die üblicherweise aus verdichtetem Siebschutt oder Beton besteht. Pflastersteine werden üblicherweise aus Naturstein, Beton, Klinker, Holz oder Hochofenschlacke hergestellt.

Es ist bekannt, Pflastersteine aus Beton oder Naturstein per Hand zu verlegen. Alternativ zu der Verlegung per Hand ist auch eine maschinelle Verlegung bekannt. Die Pflasterfläche wird in der Regel auf einem speziell gefertigten Untergrund, der Bettung, verlegt. Unter dieser Bettung befinden sich gewöhnlich verdichtete Trag- und Frostschutzschichten. Die Bettung wird in der Regel aus Mörtel, Splitt oder Sand hergestellt. Im verlegten Zustand sind zwischen den einzelnen Pflastersteinen zumeist Fugen gebildet, welche beispielsweise mit Sand oder Mörtel gefüllt werden können. Die Pflastersteine werden bisher entweder aus Naturstein geschlagen, geschnitten oder gezwickt oder aus Beton, Mörtel oder einem anderen Gussmaterial in Formen gegossen und ausgehärtet.

Ein Verfahren zum Verlegen von Pflastersteinen ist beispielsweise aus der WO 95/14821 A1 bekannt. Dabei wird ein Verlegegerät verwendet, welches einen Greifer mit einem Greifbackenpaar aufweist. Damit können lagenweise bereitgestellte Steine in einer Greifbewegung randseitig erfasst, angehoben, zu einem Verlegeort befördert und an diesem abgesetzt werden.

Die bekannten Verfahren zur Verlegung von Pflastersteinen erfordern nachteiligerweise einen hohen Personaleinsatz. An den Rändern der Pflasterfläche müssen zudem vielfach einzelne Pflastersteine zugeschnitten werden, dadurch kommt es zu einem unnötigen Materialverbrauch sowie einer Feinstaubbelastung. Des Weiteren müssen die Pflastersteine einer Pflasterfläche sorgfältig verlegt werden, um eine einheitliche Höhe der Fläche zu gewährleisten. Zudem muss auch auf einen einheitlichen Fugenabstand geachtet werden. Darüber hinaus werden die Pflastersteine in einem Werk hergestellt, zu einem Lager bzw. Depot an der Baustelle gebracht und von dort zum Verlegeort transportiert. Schließlich müssen die Steine dann per Hand oder maschinell verlegt werden. Dieser Ablauf verursacht jedoch einen hohen logistischen Aufwand, welcher die Kosten signifikant erhöht.

Die US 2014/374933 A1 beschreibt andersartige additive Verfahren.

Demnach besteht die Aufgabe der vorliegenden Erfindung darin, zumindest einzelne Nachteile des Standes der Technik zu beseitigen oder zumindest zu lindern. Die Erfindung setzt sich daher insbesondere zum Ziel, ein Verfahren der eingangs angeführten Art zu schaffen, mit welchem die Ausbildung einer individuell gestalteten Pflasterfläche vereinfacht wird.

Die Aufgabe wird durch ein Verfahren mit den Merkmalen von Anspruch 1 gelöst. Bevorzugte Ausführungsformen sind in den abhängigen Ansprüchen angegeben.

Erfindungsgemäß werden die Pflasterelemente vor Ort mit einem 3D-Druckgerät in einem 3D-Druck-Verfahren aus einem druckbaren Material auf eine Oberfläche gedruckt.

Vorteilhafterweise werden daher die einzelnen Pflasterelemente vor Ort auf der zu bedruckenden Oberfläche mittels des 3D-Druck-Verfahrens (d.h. eines additiven Verfahrens) gefertigt, um die Pflasterfläche auf der Oberfläche herzustellen. Somit kann eine Verkehrs- bzw. Wegefläche geschaffen werden. Erfindungsgemäß kann die geometrische Form der Pflasterelemente direkt und unmittelbar vor Ort festgelegt oder modifiziert werden. Die Form der Pflasterelemente kann weiters an Randbedingungen wie die Abmessungen der zu bedruckenden Oberfläche, Einbauten und Einfassungen angepasst werden. Jedes Pflasterelement kann somit an individuelle Formvorgaben angepasst werden, ohne dass ein Zuschneiden des Pflasterelementes erforderlich ist. Zur Durchführung des 3D-Druck-Verfahrens kann ein 3D-Druckgerät eingesetzt werden, welches beispielsweise ein insbesondere in horizontaler und/oder vertikaler Richtung verfahrbarer Roboter oder ein ortsfester Roboter oder eine vorzugsweise verfahrbare Fertigungsbrücke ist. In Gebrauch wird das 3D-Druckgerät auf die Baustelle geliefert, an welcher die Pflasterfläche errichtet werden soll. Dort wird das 3D-Druckgerät positioniert und beginnt mit der additiven Fertigung ("3D-Druck") der Pflasterelemente. Die Pflasterelemente werden demnach nicht vorab in einem Werk hergestellt, sondern werden direkt vor Ort, d.h. am bestimmungsgemäßen Einsatzort der Pflasterfläche, produziert bzw. gedruckt. Je nach Ausführung kann mittels des 3D-Druckgeräts zudem eine Bettung, vorzugsweise aus zumindest einem Material der Gruppe bestehend aus Sand, Splitt oder Bettungsmörtel, erzeugt werden.

Für die Zwecke dieser Offenbarung wird als "Pflasterstein" ein Pflasterelement verstanden, dessen größte Gesamtlänge (horizontale Erstreckung) 30 cm nicht überschreitet und dessen geringste Dicke (vertikale Erstreckung) größer als ein Drittel der größten Gesamtlänge ist.

Für die Zwecke dieser Offenbarung wird als "Pflasterplatte" ein Pflasterelement verstanden, dessen größte Gesamtlänge mehr als 15 cm beträgt und 1 m nicht überschreitet und dessen größte Dicke höchstens ein Drittel der größten Gesamtlänge ist.

Für die Zwecke dieser Offenbarung beziehen sich die Orts- und Richtungsangaben, wie "oben", "unten" etc., auf die fertige Pflasterfläche am Einsatzort.

Bei einer bevorzugten Ausführungsform wird das 3D-Druckgerät mit einem trockenen Material versorgt, welches in dem 3D-Druckgerät mit Wasser vermischt und anschließend gedruckt wird. Insbesondere kann das 3D-Druckgerät mit unterschiedlichen Materialien im trockenen Zustand beschickt werden. Alternativ kann das 3D-Druckgerät das druckbare Material im flüssigen Zustand erhalten.

Unter anderem kann das 3D-Druckgerät mit einem druckbaren Material aufweisend zumindest eines von Frischbeton, Trockenbeton, Zement, Frischmörtel, Trockenmörtel, Betonzusatzmittel, Estrich, Zuschlagsgestein, Sand, Bindemittel, Kalk, Ton, Gips, Silizium, Holzpartikel, Keramik, verschiedene Natursteine, Ziegel, Wasser, Kleber, Plastik, Putz, Graphen, Metall, zum Beispiel Stahl oder Aluminium, Kunststoffe, Dämmstoffe, Dichtstoffe, Glas und Asphalt beschickt werden. Das 3D-Druckgerät kann auch mit Mischungen dieser Materialien beschickt werden. Diese Materialien können folglich auch Bestandteil der durch das 3D-Druckgerät gefertigten Pflasterelemente sein.

In einer bevorzugten Ausführungsform weist das 3D-Druckgerät einen Extruder auf, durch den das druckbare Material auf eine Oberfläche aufgebracht wird. Die Komponenten des druckbaren Materials werden vorzugsweise innerhalb des Extruders, unmittelbar vor dem Extruder, in einer Mischkammer oder einem statischen Mischer, miteinander vermischt und anschließend auf die zu bedruckende Oberfläche aufgebracht.

Bei einer bevorzugten Ausführungsform wird mit dem 3D-Druckgerät eine Bettungsschicht, insbesondere ausgewählt aus der Gruppe bestehend aus Splitt, Sand oder Mörtel erstellt, auf welche das druckbare Material gedruckt wird. Vorteilhafterweise kann so nicht nur die Pflasterfläche, sondern auch die Bettungsschicht durch das 3D-Druckgerät hergestellt werden, wodurch das Herstellungsverfahren vereinfacht und der maschinelle Aufwand reduziert wird. Die mit der Pflasterfläche zu bedruckende Oberfläche kann daher bevorzugt eine Bettungsschicht aus zumindest einem von Splitt, Sand oder Bettungsmörtel sein.

Vorzugsweise werden die Pflasterelemente aus zumindest einer ersten Schicht und einer zweiten Schicht aus dem druckbaren Material gefertigt. Durch den Aufbau der Pflasterelemente aus mehreren, vorzugsweise im Wesentlichen horizontalen Schichten können unterschiedliche Materialien in unterschiedlichen Schichten oder auch innerhalb einer Schicht der Pflasterelemente verarbeitet werden. Dadurch können einerseits dekorative, andererseits aber auch technische Effekte erzielt werden. Beispielsweise kann eine Isolierschicht, insbesondere aus einem geschäumten Kunststoff, wie EPS, XPS sowie aus geschäumten Elastomeren oder aus sonstigen Fasern oder Schäumen, optional zementgebunden, gegen Kälte und/oder Feuchtigkeit in das Pflasterelement eingearbeitet werden. Des Weiteren können durch den Einsatz unterschiedlicher Materialien Kompositwerkstoffe erzeugt werden.

Um mehrere Pflasterelemente mit geschichtetem Aufbau gleichzeitig herzustellen, kann es günstig sein, wenn zunächst die ersten Schichten der Pflasterelemente gefertigt werden, bevor die zweiten Schichten der Pflasterelemente gefertigt werden. Mehrerer Pflasterelemente können somit schrittweise in einer bestimmten Form gefertigt werden, wobei bei einem ersten Pflasterelement begonnen wird, d.h. die erste Schicht des ersten Pflasterelementes erzeugt wird, anschließend ein zweites Pflasterelement begonnen, d.h. die erste Schicht des zweiten Pflasterelementes erzeugt wird, gegebenenfalls ein dritter und weitere Pflasterelemente begonnen werden, und danach mit der Fertigung des ersten Pflasterelementes, des zweiten Pflasterelementes usw. fortgesetzt wird. Dieser Vorgang wird so oft wiederholt, bis sämtliche Pflasterelemente, die dadurch im Wesentlichen gleichzeitig gefertigt werden, fertiggestellt sind.

Bei einer bevorzugten Ausführungsform werden die (horizontalen) Deckschichten, d.h. die Sichtseiten, der Pflasterelemente, mit höherer Auflösung als die darunterliegenden (horizontalen) Schichten der Pflasterelemente gedruckt.

Bei einer bevorzugten Ausführungsform werden die Pflasterelemente mit einer inneren Struktur mit Hohlräumen gedruckt. Diese Ausführung hat den Vorteil, dass das Gewicht der Pflasterelemente reduziert werden kann.

Bei dieser Ausführungsform ist es günstig, wenn die innere Struktur auf zumindest eine vollflächige untere Schicht des jeweiligen Pflasterelementes gedruckt wird. Schließlich können die Deckschichten auf die inneren Strukturen gedruckt werden, so dass die inneren Strukturen ober- und unterseitig abgeschlossen sind.

Bei einer bevorzugten Ausführungsform umfasst die Fertigung des Pflasterelementes daher folgende Schritte:
- Vorzugsweise Drucken zumindest einer vollflächigen unteren Schicht;
- Drucken der Kontur des Pflasterelementes;
- Drucken einer inneren Struktur innerhalb der Kontur des Pflasterelementes, wobei die innere Struktur Hohlräume aufweist, oder vollständiges Auffüllen des Innenbereichs innerhalb der Kontur des Pflasterelementes; und
- Vorzugsweise Drucken einer vollflächigen Deckschicht auf die innere Struktur.

Bei einer ersten Variante wird - vorzugweise nach Erstellung einer oder mehrerer horizontaler Schichten - zunächst die Kontur des Pflasterelements bis zur Gesamthöhe des Pflasterelements (gegebenenfalls abzüglich der Dicke der Deckschicht) gedruckt, dann die Kontur vollständig aufgefüllt, insbesondere ausgegossen, oder mit der inneren Struktur mit Hohlräumen versehen. Schließlich kann die Deckschicht, vorzugsweise mit höherer Auflösung als die Kontur, gedruckt werden.

Bei einer zweiten Variante wird - vorzugweise nach Erstellung einer oder mehrerer horizontaler Schichten - die Kontur des Pflasterelements bis zu einer vorgegebenen Teilhöhe gedruckt, danach der Innenbereich innerhalb der Kontur aufgefüllt oder mit der inneren Struktur versehen, danach das Drucken der Kontur bis zu einer weiteren, höheren Teilhöhe fortgesetzt, danach der entstehende Innenbereich innerhalb der Kontun entsprechend der weiteren Teilhöhe aufgefüllt, insbesondere ausgegossen, oder mit der inneren Struktur versehen. Dieser Vorgang kann wiederholt werden, bis die Gesamthöhe des Pflasterelements (gegebenenfalls abzüglich der Dicke einer Deckschicht) erreicht wird. Schließlich kann die Deckschicht, vorzugsweise mit höherer Auflösung als die Kontur, gedruckt werden.

Bei einer dritten Variante werden - vorzugweise nach Erstellung einer oder mehrerer horizontaler Schichten - die Kontur und die innere Struktur zusammen in aufeinanderfolgenden horizontalen Schichten gedruckt. Schließlich kann die Deckschicht gedruckt werden.

In einer bevorzugten Ausführungsform werden zunächst die unteren Schichten (d.h. insbesondere die Konturen und die Füllungen bzw. die inneren Strukturen) der Pflasterelemente mit einer ersten, niedrigeren Auflösung gedruckt, und anschließend die Oberflächen (insbesondere Vorsatzschichten) der Pflasterelemente (d.h. die von außen sichtbaren bzw. freiliegenden Oberseiten) mit einer zweiten, höheren Auflösung gedruckt. Vorzugsweise machen die unteren Schichten mehr als 70%, insbesondere mehr als 80%, vorzugsweise etwa 90%, des Volumens des Pflasterelementes aus.

Demnach werden bei dieser Ausführungsform die Oberflächen der Pflasterelemente mit einer höheren Auflösung als die darunterliegenden Schichten der Pflasterelemente gedruckt. Bei dieser Ausführungsform können die Konturen (d.h. die seitlichen Umrandungen), die Füllungen (bzw. die inneren Strukturen) und die Oberflächen der Pflasterelemente jeweils das gleiche oder ein unterschiedliches Material aufweisen. Somit können beispielsweise die Konturen aus einem ersten, schnell erstarrenden Material gedruckt werden, wobei die Innenräume innerhalb der Konturen mit einem zweiten, beispielsweise isolierenden, Material gefüllt werden. Abschließend können die Oberseiten der gefüllten Konturen der Pflasterelemente mit einer hochauflösenden, dekorativen Deckschicht bedruckt werden, welche beispielsweise ein Bild, ein Logo, ein Muster oder einen Firmennamen aufweist.

Bevorzugt wird das 3D-Druckgerät positioniert, anschließend zumindest ein Pflasterelement hergestellt, und danach das 3D-Druckgerät neu positioniert. Die Neupositionierung des 3D-Druckgeräts erfolgt vorzugsweise über eine Steuerungssoftware, welche insbesondere eine vorgegebene Route aufweisen kann. Alternativ kann die Bewegung des 3D-Druckgeräts vor Ort, insbesondere durch einen Benutzer, gesteuert werden. Die vorprogrammierte Route kann mittels der Steuerungssoftware in Abhängigkeit von Eingangsdaten aus Sensoren jederzeit in Echtzeit geändert werden. Die Festlegung der neuen Position kann auch mittels bekannter Verfahren zur Ortsbestimmung, wie beispielsweise Lasertriangulation, Ultraschalltriangulation, Tachymeter, GPS, Kamera(s), 3D-Kameras, 3D-Scanner, Lasersensoren, Lasertracker erfolgen.

In einer besonders bevorzugten Ausführungsform wird vor dem Bedrucken der Oberfläche die Umgebung der Oberfläche, insbesondere die Struktur der Oberfläche, mit einem Sensor vermessen. Bei einer bevorzugten Variante werden Unebenheiten bzw. Niveauunterschiede an der zu bedruckenden Oberfläche dadurch ausgeglichen, dass Pflasterelemente unterschiedlicher Höhe gedruckt werden. Bei einer weiteren bevorzugten Variante wird zumindest ein Pflasterelement mit einem Höhenverlauf, d.h. mit unterschiedlichen Erstreckungen in Höhenrichtung entlang des Pflasterelements, gedruckt. Die Messgröße des Sensors kann ausgewählt sein aus zumindest einem von Härte, Elastizitätsmodul, Tiefe, Topographie, Temperatur, Rauheit und Feuchtigkeit der zu bedruckenden Oberfläche. Als Sensor kann ein Drucksensor, optischer Sensor (z.B. 3D-Kamera), Lasersensor, Indenter, Perthometer, Temperatursensor, Feuchtigkeitssensor, oder Ultraschallsensor vorgesehen sein.

Bei einer bevorzugten Ausführungsform kann auf eine Bettungsschicht verzichtet werden, indem Unebenheiten der oberen Tragschicht beim 3D-Druck der Pflasterelemente mittels des Sensors ausgeglichen werden, so dass die gedruckten Pflasterelemente vollflächig auf der oberen Tragschicht aufliegen.

Die Pflasterelemente können daher vor Ort insbesondere derart gedruckt werden, dass zuerst eine oder mehrere untere, vorzugsweise im Wesentlichen horizontale Schichten gedruckt werden. Danach werden die Konturen der Pflasterelemente, d.h. deren vorzugsweise im Wesentlichen vertikale Außenwände, sowie eine innere Struktur innerhalb der Konturen gedruckt.

Bei einer bevorzugten Ausführung füllt die innere Struktur die Konturen nicht vollständig aus, sondern lässt Hohlräume frei, welche beispielsweise zumindest 10 %, vorzugsweise zumindest 20 %, des Volumens des Pflasterelements ausmachen. Bevorzugt bildet die innere Struktur ein Muster, beispielsweise ein Wabenmuster, ein Kreuzmuster, ein Diagonalmuster, ein Muster entsprechend einer sogenannten Hilbertkurve oder ein Muster entsprechend eines sogenannten "archimedean chord", ein konzentrisches Muster oder ein sogenanntes "octagram spiral"-Muster. Die Form der inneren Struktur kann auch durch eine Strukturoptimierung basierend auf einer finite Elemente Analyse generiert werden. Auf die innere Struktur kann schließlich eine oder mehrere vollflächige, vorzugsweise im Wesentlichen horizontale Deckschicht(en), gedruckt werden, welche die Oberfläche des Pflasterelementes bildet.

Bei einer bevorzugten Ausführungsform werden die Pflasterelemente mit Bewehrungselementen, vorzugsweise aufweisend zumindest eines von Fasern, technische Textilien, Matten, Gitter, Stäbe, Stangen, versehen. Die Bewehrungselemente können aus verschiedensten Materialien, wie Metall, Karbon, Kunststoff, gefertigt sein.

Bei einer bevorzugten Ausführungsform werden Temperatursensoren in den Pflasterelementen aufgenommen, um die Bodentemperatur zu erfassen. Die Temperatursensoren können ausgelesen werden. Dadurch kann unter anderem ein Einfrieren der Pflasterdecke erkannt werden.

Bei einer bevorzugten Ausführungsform werden Sensoren zur Ermittlung von Niederschlagsmengen und/oder seismischen Daten in den Pflasterelementen aufgenommen.

Bei einer weiteren bevorzugten Ausführungsform werden Heizelemente in die Pflasterelemente aufgenommen. Dadurch kann ein Einfrieren der Pflasterdecke verhindert werden.

Bei einer weiteren bevorzugten Ausführungsform werden Drucksensoren, beispielsweise Magnetsensoren, in die Pflasterelemente aufgenommen, um eine Belastung der Pflasterelemente in Gebrauch, beispielsweise durch auf den Pflasterelementen parkende Autos oder stehende Personen, zu erkennen.

Bei einer weiteren bevorzugten Ausführungsform werden Solarzellen oder Piezoelemente zur Stromgewinnung in die Pflasterelemente aufgenommen.

Bei einer weiteren bevorzugten Ausführungsform werden die Pflasterelemente insbesondere an den Oberseiten mit Leuchtelementen, insbesondere LED-Elementen, versehen, um insbesondere Signale, Lichter oder Bilder wiederzugeben.

Weiters kann ein 3D-Druckgerät zum Drucken der Pflasterelemente vor Ort in einem 3D-Druck-Verfahren auf eine Oberfläche, insbesondere auf eine Bettungsschicht, vorgesehen sein, welches jedoch nicht Teil der vorliegenden Erfindung ist.

Bevorzugt ist das 3D-Druckgerät dazu eingerichtet, die Bettungsschicht herzustellen, bevor die Pflasterelemente auf die Oberfläche der Bettungsschicht gedruckt werden. Vorzugsweise ist das 3D-Druckgerät weiters dazu eingerichtet, zumindest eine unter der Bettungsschicht liegende Tragschicht und/oder zumindest eine unter der Tragschicht liegende Frostschutzschicht herzustellen. Besonders bevorzugt kann der gesamte Schichtaufbau der Pflasterfläche, der sogenannte Oberbau, mit dem 3D-Druckgerät hergestellt werden.

Vorzugsweise weist das 3D-Druckgerät einen Extruder mit einer Extruder-Düse auf, welche eine vorzugsweise verschließbare Austrittsöffnung aufweist. Dadurch kann vorteilhafterweise ein exaktes und verlustfreies Druckverfahren durchgeführt werden. Um Pflasterelemente unterschiedlichster Art herstellen zu können, ist der Durchmesser der Austrittsöffnung der Extruder-Düse vorzugsweise zwischen 0,01 cm und 20 cm, insbesondere zwischen 0,1 cm und 1 cm, einstellbar. Durch den variablen Durchmesser der Austrittsöffnung können einerseits grobe Konturen oder großflächige Füllungen der Pflasterelemente hergestellt und andererseits hochaufgelöste Feinstrukturen in das Pflasterelement eingearbeitet werden, ohne vorher einen Wechsel der Extruder-Düse vornehmen zu müssen. Insbesondere können mit einer kleinen bzw. schmalen Austrittsöffnung auch Engstellen, wie beispielsweise Fugen, präzise aufgefüllt werden.

Um das druckbare Material vor Ort herzustellen, ist es günstig, wenn das 3D-Druckgerät zumindest eine Zuleitung für trockenes Material und eine Zuleitung für Wasser aufweist. Vorzugsweise wird das druckbare Material in einer Mischkammer innerhalb des 3D-Druckgeräts gemischt und steht danach zur Verarbeitung bereit. Damit kann das druckbare Material, aus welchem die Pflasterelemente hergestellt werden, direkt im 3D-Druckgerät zusammengemischt werden. Vorteilhafterweise kann damit vor Ort die Zusammensetzung der Pflasterelemente eingestellt und variiert werden.

Vorzugsweise weist das 3D-Druckgerät, vorzugsweise die Extruder-Düse, eine Zuleitung für Farben und/oder Additive auf. Dadurch können einerseits dekorative Muster in das Pflasterelement eingearbeitet werden oder andererseits mittels der Additiven spezielle chemische oder physikalische Eigenschaften erzeugt werden. Beispielsweise können fluoreszierende Additive in das Pflasterelement eingearbeitet werden, um ein fluoreszierendes Pflasterelement zu erzeugen. Um ein möglichst präzises Drucken zu ermöglichen, weist das 3D-

Druckgerät bevorzugt einen verschwenkbaren Roboterarm auf, wobei vorzugsweise die Extruder-Düse an einem Ende des Roboterarms schwenkbar angeordnet ist. Der Roboterarm wird bevorzugt über die Steuerungssoftware gesteuert. Die Bewegung des Roboterarmes kann auch vorprogrammierbar sein. Somit kann ein bestimmtes Muster bzw. eine bestimmte Form des Pflasterelementes vorprogrammiert werden, wobei der Roboterarm diese Form, durch entsprechende Steuerung des Extruders, automatisiert drucken kann.

Vorzugsweise weist das 3D-Druckgerät zumindest einen Sensor auf, mit welchem die Struktur der zu bedruckenden Oberfläche, vorzugsweise zudem Randbedingungen wie Abmessungen der zu bedruckenden Oberfläche, Einbauten und Einfassungen, vermessen werden kann. Die dadurch ermittelten Daten können durch die Steuerung des 3D-Druckgeräts verarbeitet werden.

Bevorzugt weist das 3D-Druckgerät einen mobilen Unterbau auf. Die Steuerung der Bewegung des mobilen Unterbaus erfolgt bevorzugt mit einer Steuerungssoftware. Damit kann die Position des 3D-Druckgeräts auf der zu bedruckenden Oberfläche vorprogrammiert werden, wodurch das 3D-Druckgerät im Wesentlichen vollautomatisch den Druckvorgang durchführen kann. Um die selbstfahrenden Eigenschaften des 3D-Druckgeräts zu verbessern, ist es überdies von Vorteil, wenn der mobile Unterbau weitere Sensoren aufweist, wie beispielsweise einen GPS Sensor, Lasersensor, Ultraschallsensor, Tachymeter, Neigungssensor, Tastsensor und/oder optischer Sensor wie 2D- und/oder 3D-Kamera zur Abstandsbestimmung und/oder Positionsbestimmung.

Um eine möglichst zuverlässige Fortbewegung, beispielsweise auf einem Baustellenuntergrund, zu gewährleisten, ist es günstig, wenn der mobile Unterbau einen Kettenantrieb aufweist.

Alternativ ist das 3D-Druckgerät mit einem Schienensystem in einer im Wesentlichen horizontalen und vertikalen Ebene entlang der zu bedruckenden Oberfläche bewegbar. Das Schienensystem ist bevorzugt im Wesentlichen oberhalb der zu bedruckenden Fläche angeordnet, wobei das 3D-Druckgerät vorzugsweise an dem Schienensystem aufgehängt ist.

Weiter alternativ weist das 3D-Druckgerät ein oder mehrere Räder auf.

Für die Zwecke dieser Offenbarung beziehen sich die Orts- und Richtungsangaben für das 3D-Druckgerät, wie "oben", "unten" etc., auf den bestimmungsgemäßen Betriebszustand des 3D-Druckgeräts beim Drucken von Pflasterelementen auf die Oberfläche.

Die Erfindung wird nachstehend anhand von bevorzugten Ausführungsbeispielen, auf die sie jedoch nicht beschränkt werden soll, weiter erläutert. In der Zeichnung zeigt:
Fig. 1 eine schematische Ansicht eines 3D-Druckgeräts bei der erfindungsgemäßen Herstellung einer Pflasterfläche;
Fig. 2 eine schematische Ansicht alternativen Ausführungsform des 3D-Druckgeräts;
Fig. 3A die Schritte bei der Herstellung eines einzelnen Pflastersteins gemäß einer Ausführungsvariante;
Fig. 3B die Schritte bei der Herstellung eines einzelnen Pflastersteins gemäß einer weiteren Ausführungsvariante;
Fig. 3C die Schritte bei der Herstellung eines einzelnen Pflastersteins gemäß einer weiteren Ausführungsvariante;
Fig. 4a-4i verschiedene Ansichten des 3D-Druckgeräts bei der Herstellung des Pflasterbelags;
Fig. 5a-5e verschiedene Ausführungsformen des mobilen 3D-Druckgeräts;
Fig. 6 eine Ansicht eines 3D-Druckgeräts mit einem Schienensystem;
Fig. 7 ein Flussdiagramm einer ersten Variante des Herstellungsverfahrens;
Fig. 8 ein Flussdiagramm einer zweiten Variante des Herstellungsverfahrens;
Fig. 9 eine schematische Ansicht einer ersten Ausführungsvariante des 3D-Druckgeräts mit Extruder;
Fig. 10 eine schematische Ansicht einer zweiten Ausführungsvariante des 3D-Druckgeräts mit Extruder;
Fig. 11 schematisch verschiedene Querschnitte von Pflastersteinen mit innerer Struktur; und
Fig. 12 schematisch ein Modell eines Pflastersteines mit einem inneren Hohlraum, welcher mittels Topologieoptimierung gewonnen wird.

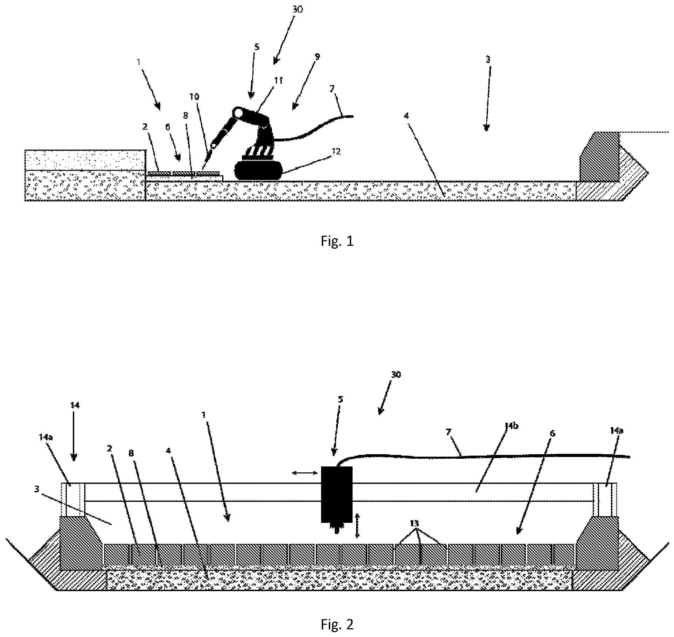

Fig. 1 zeigt schematisch ein Verfahren zur Herstellung einer Pflasterfläche 1 aus Pflasterelementen, insbesondere aus Pflastersteinen 2 im 3D-Druck. Auf einer oberen Tragschicht 3 mit einem Planum 4 wird ein 3D-Druckgerät 5 angeordnet, welches die Pflastersteine 2 vor Ort in einem 3D-Druck-Verfahren aus einem druckbaren Material 6 auf die freiliegende Oberfläche druckt. Das 3D-Druckgerät 5 kann auf dem Planum 4 in alle Richtungen bewegt werden. Über eine Zuleitung 7 wird das 3D-Druckgerät 5 mit trockenem Material (beispielsweise Zement, Sand, Zuschläge, Farbpigmente) versorgt. Die trockenen Ausgangsstoffe werden mit Wasser vermischt, um das druckbare Material 6 zu erhalten. Alternativ kann das druckbare Material in viskosem Zustand zu dem 3D-Druckgerät, insbesondere mittels einer Exzenterschneckenpumpe transportiert werden. Vor dem Drucken der Pflastersteine 2 wird auf dem Planum 4 eine Tragschicht 8 erzeugt. Bevorzugt wird die Tragschicht 8 ebenfalls mit dem 3D-Druckgerät 5 hergestellt. Auf der Tragschicht 8 werden die Pflastersteine 2 bevorzugt gemäß einer vorprogrammierten Route, beispielsweise entsprechend einem gewünschten Muster, gedruckt. Das 3D-Druckgerät 5 hat einen Extruder 9 mit einer Extruder-Düse 10, durch welche das druckbare Material 6 auf die Tragschicht 8 aufgebracht wird. Der Austritt von Material aus der Extruder-Düse 10 kann gestoppt werden. Die Extruder-Düse 10 hat einen variierbaren Durchmesser. In der gezeigten Ausführung weist das 3D-Druckgerät 5 einen Roboterarm 11 auf, wobei der Roboterarm 11 am einen Ende gelenkig mit dem mobilen Unterbau des 3D-Druckgeräts 5 verbunden ist. Am anderen Ende des Roboterarms 11 ist die Extruder-Düse 10 vorgesehen. Dadurch ist eine präzise Steuerung der Extruder-Düse 10 während des Druckverfahrens möglich.

Das 3D-Druckgerät 5 wird demnach im Bereich der zu pflasternden Oberfläche positioniert. Beispielsweise kann das 3D-Druckgerät auf einer Straße, einem Gehweg, einer Fußgängerzone, jeweils auf dem Unterbau, auf der oberen Tragschicht, auf der Frostschutzschicht, oder auf dem Untergrund, oder auch an Hauswänden positioniert werden. Das 3D-Druckgerät 5 kann auch mit Seilen abgehängt werden. Die Seile können an bestehenden Bauwerken oder an eigens zu errichtenden Bauwerken befestigt werden.

Die Pflastersteine 2 werden schichtweise aus zumindest einer ersten Schicht und einer zweiten Schicht aus dem druckbaren Material 6 gefertigt, wobei zunächst die ersten Schichten der Pflastersteine 2 gefertigt werden, bevor die zweiten Schichten der Pflastersteine 2 gefertigt werden. Ist ein Pflasterstein 2 oder eine Gruppe von Pflastersteinen 2 fertig gedruckt, wird das 3D-Druckgerät 5 neu positioniert und ein neuer Druckvorgang wird begonnen. Dazu weist das 3D-Druckgerät 5 einen mobilen Unterbau 12, in der Ausführung gemäß Fig. 1 einen Kettenantrieb, auf. Die Steuerung erfolgt mittels einer Steuerungssoftware. Nachdem die Pflastersteine 2 gedruckt wurden, werden die Fugen 13 zwischen den Pflastersteinen 2 mit einem Fugenmaterial gefüllt. Das Auffüllen der Fugen mit Fugenmaterial kann durch das 3D-Druckgerät erfolgen.

Fig. 2 zeigt eine alternative Ausführung des vorzugsweise in horizontaler und vertikaler Richtung beweglichen 3D-Druckgeräts 5. Seitlich und oberhalb der oberen Tragschicht 3 bzw. des Planums 4 wird ein Schienensystem 14 vorgesehen, wobei mit zwei Querschienen 14a und mit einer darauf gleitend gelagerten Längsschiene 14b die gesamte Fläche des Planums 4 ansteuerbar ist. Das 3D-Druckgerät 5 ist an der Längsschiene 14b aufgehängt, wodurch eine Bewegung in horizontaler und vertikaler Ebene entlang der zu bedruckenden Oberfläche ermöglicht wird. Die Versorgung mit druckbarem Material 6 erfolgt über die Zuleitung 7, wobei die Materialien entweder vor der Zuführung in das 3D-Druckgerät 5 gemischt werden, oder unmittelbar in dem 3D-Druckgerät 5 gemischt werden. Die Steuerung erfolgt auch hier über eine Steuerungssoftware, wodurch das 3D-Druckgerät 5 das Druckverfahren vollautomatisch und autonom durchführen kann.

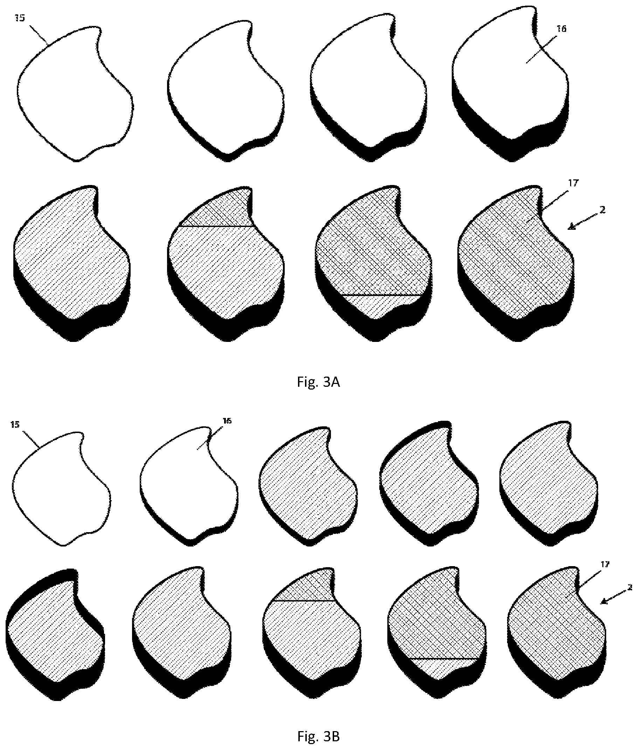

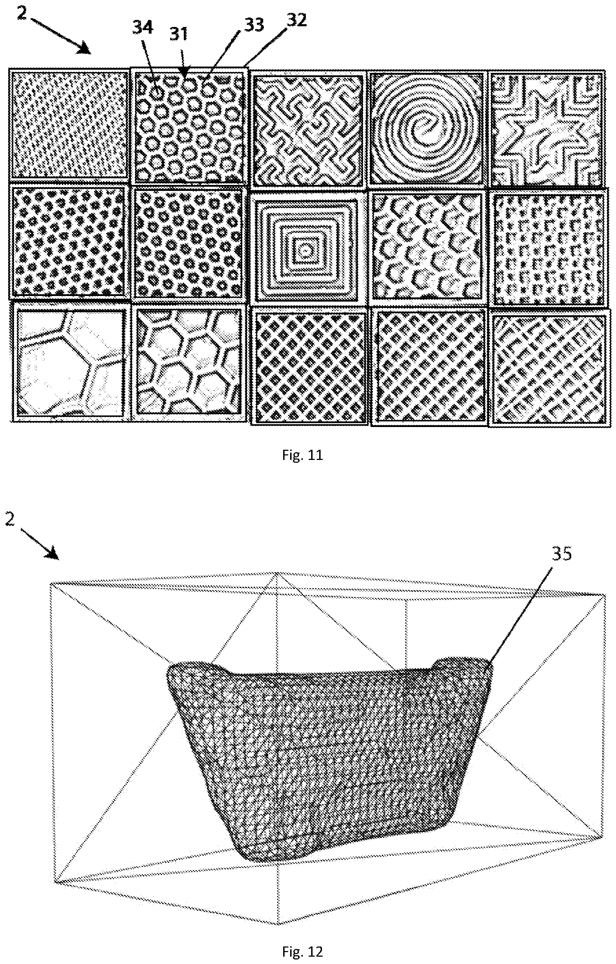

Fig. 3A zeigt den schrittweisen Druckvorgang eines Pflastersteins 2 gemäß einer ersten Ausführungsvariante, wobei - vorzugweise nach Erstellung einer oder mehrerer horizontaler Schichten - zunächst die Konturen (Außenumrandungen) 15 der Pflastersteine 2 gedruckt werden, dann die Konturen 15 vollständig aufgefüllt oder mit einer inneren Struktur 31 mit Hohlräumen (vgl. Fig. 11, Fig. 12) versehen und anschließend die Oberflächen der Pflastersteine 2, vorzugsweise mit höherer Auflösung als die Konturen 15, gedruckt werden. Die Konturen 15 weisen daher einen schichtartigen Aufbau auf, wobei mehrere gleichartige Schichten übereinander gedruckt werden. Sobald die letzte Schicht der Kontur 15 gedruckt ist, wird der Innenbereich 16 mit einer Füllung aufgefüllt oder mit der inneren Struktur 31 versehen. Nachdem die Kontur 15 aufgefüllt oder mit der inneren Struktur versehen worden ist, wird eine Deckschicht 17 gedruckt. Die Deckschicht kann, so wie die Füllung, aus einem anderen Material als die Kontur 15 hergestellt sein. Beim Drucken der Deckschicht 17 kann, um eine höhere Auflösung zu erzielen, der Durchmesser der Extruderdüse 10 verringert werden.

Fig. 3B zeigt eine alternative Ausführung des Druckvorgangs, bei welchem, vorzugweise nach Erstellung einer oder mehrerer horizontaler Schichten, die Konturen (Außenumrandungen) 15 bis zu einer vorgegebenen Teilhöhe des Pflastersteins 2 gefertigt werden. Dann wird der Innenbereich 16 aufgefüllt oder mit der inneren Struktur 31 versehen. Danach wird die Fertigung der Konturen 15 bis zu einer weiteren, höheren Teilhöhe des Pflastersteins 2 fortgesetzt. Anschließend wird der Innenbereich 16 wieder aufgefüllt oder mit der inneren Struktur 31 versehen. Das abwechselnde Fertigen der Konturen 15 und der Füllung bzw. der inneren Struktur 31 wird fortgesetzt, bis die erforderliche Gesamthöhe des Pflasterelements 2 (gegebenenfalls abzüglich der Dicke einer Deckschicht 17) erreicht wird. Bevorzugt wird die Oberfläche des bis dahin vorliegenden Pflastersteins 2 mit der Deckschicht 17 bedruckt. Diese kann, so wie die Füllung, aus einem anderen Material als die Kontur 15 hergestellt sein. Beim Drucken der Deckschicht 17 kann, um eine höhere Auflösung zu erzielen, der Durchmesser der Extruderdüse 10 verringert werden. Diese Ausführung erleichtert es, die Stabilität der Konturen 15 bei der Fertigung der Pflasterelemente zu gewährleisten.

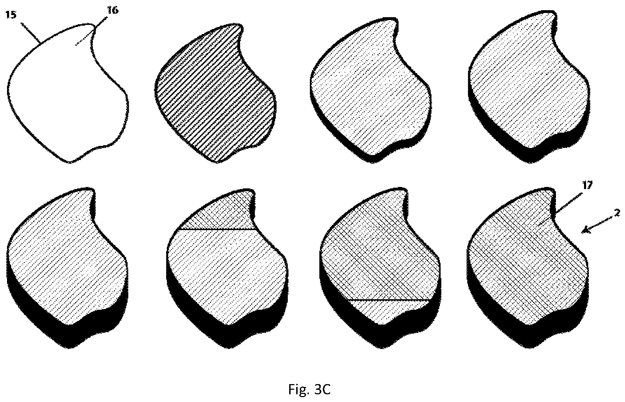

Fig. 3C zeigt eine alternative Ausführung, bei welcher, vorzugweise nach Erstellung einer oder mehrerer horizontaler Schichten, die Konturen 15 sowie die innere Struktur 31 Schicht für Schicht erstellt werden. Danach wird die Oberfläche des Pflastersteins 2 mit der Deckschicht 17 bedruckt. Die Deckschicht 17 kann, so wie die Füllung, aus einem anderen Material als die Kontur 15 hergestellt sein. Beim Drucken der Deckschicht 17 kann, um eine höhere Auflösung zu erzielen, der Durchmesser der Extruderdüse 10 verringert werden.

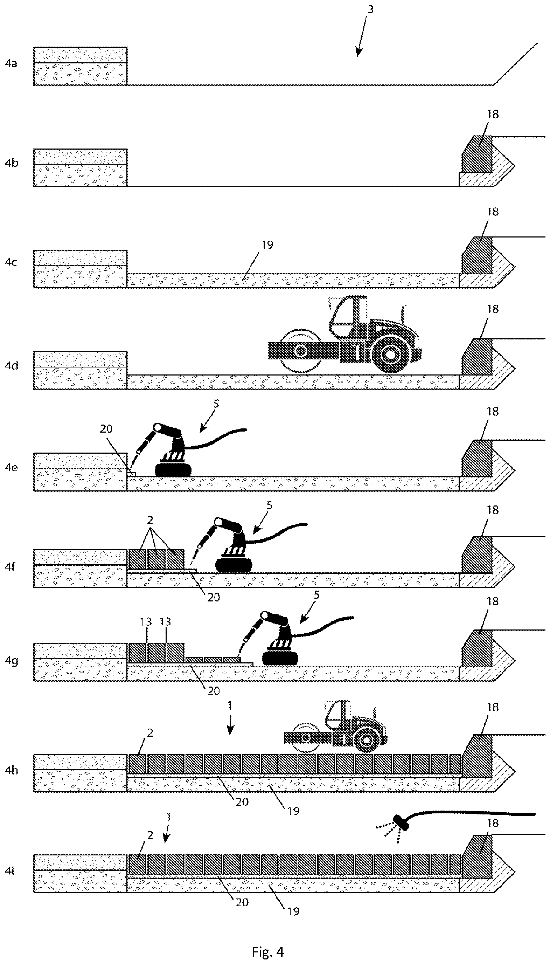

Fig. 4a-4i zeigt einen bevorzugten Ablauf bei der Herstellung der Pflasterfläche 1, wobei die folgenden Schritte nacheinander durchgeführt werden:
Fig. 4a) : optional Aushub der Einbuchtung 3,
Fig. 4b) : optional Einbetonieren von Randsteinen 18,
Fig. 4c) : Einbringen einer ungebundenen oder gebundenen oberen Tragschicht 19,
Fig. 4d) : optional Verdichten der (ungebundenen) oberen Tragschicht 19,
Fig. 4e) : optional Einbringen einer Bettungsschicht 20, beispielsweise einer Sandbettung oder Mörtelbettung, auf die verdichtete ungebundene oder gebundene obere Tragschicht 19,
Fig. 4f) : Fertigung der Pflastersteine 2 vor Ort im 3D-Druck-Verfahren auf die Bettungsschicht 20 oder direkt auf die obere Tragschicht 19,
Fig. 4g) : Einbringen einer Füllung in Fugen 13 zwischen den Pflastersteinen 2,
Fig. 4h) : optional Verdichten der Pflasterdecke,
Fig. 4i) : optional Einschwemmen.

Die Schritte gemäß den Fig. 4c, 4e, 4f und 4g können jeweils mit dem 3D-Druckgerät 5 durchgeführt werden. Somit wird im Wesentlichen der gesamte Schichtaufbau der Pflasterfläche 1 mit dem 3D-Druckgerät 5 hergestellt.

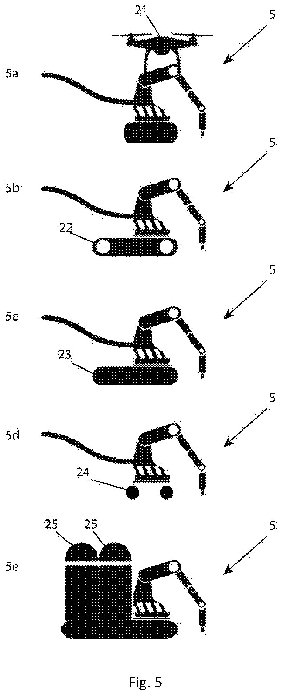

Die Fig. 5A bis 5e zeigen verschiedene Ausführungen des mobilen 3D-Druckgeräts 5. Fig. 5a zeigt eine fliegende Drohne 21 zur Beförderung des 3D-Druckgeräts 5. Fig. 5b zeigt einen Unterbau mit Kettenantrieb 22, Fig. 5c einen Unterbau mit Luftkissenantrieb 23, Fig. 5d einen bereiften Unterbau 24, und Fig. 5e einen Unterbau, welcher Behälter 25 mit dem druckbaren trockenen, flüssigen oder viskosen Materialien 6 aufweist. Je nach Anwendung kann der passende Unterbau gewählt werden, wobei das Druck-verfahren jeweils vollautomatisch mittels einer Steuerungssoftware durchgeführt wird.

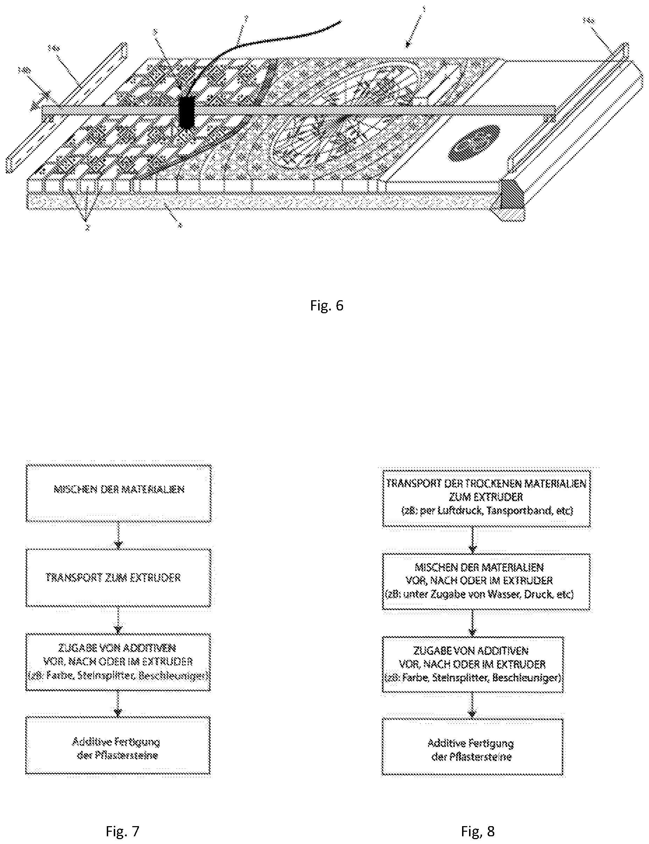

Die Fig. 7 und 8 zeigen Flussdiagramme für zwei Varianten des Druckverfahrens. Figur 7 zeigt die Schritte: 1: Mischen der Materialien, 2: Transport zum Extruder, 3: Zugabe von Additiven vor, nach oder im Extruder (z.B. Farbe, Steinsplitter, Beschleuniger), 4: Additive Fertigung der Pflastersteine. Figur 8 zeigt die Schritte: 1: Transport der trockenen Materialien zum Extruder (z.B. per Luftdruck, Transportband, etc), 2: Mischen der Materialien vor, nach oder im Extruder (z.B. unter Zugabe von Wasser, Druck, etc), 3: Zugabe von Additiven vor, nach oder im Extruder (z.B. Farbe, Steinsplitter, Beschleuniger), 4: Additive Fertigung der Pflastersteine. In der Variante gemäß Fig. 7 werden die Ausgangsstoffe vorab gemischt, zum Extruder 9, beispielsweise über Zuleitungen 7, transportiert, und mit Additiven versetzt. Anschließend werden die Pflastersteine 2 gedruckt. Gemäß Fig. 8 erfolgt das Mischen der Ausgangsstoffe im Extruder 9 selbst, wobei die einzelnen Ausgangsstoffe getrennt zum Extruder 9 transportiert werden. Nach Zugabe von Additiven erfolgt der Druck der Pflastersteine 2.

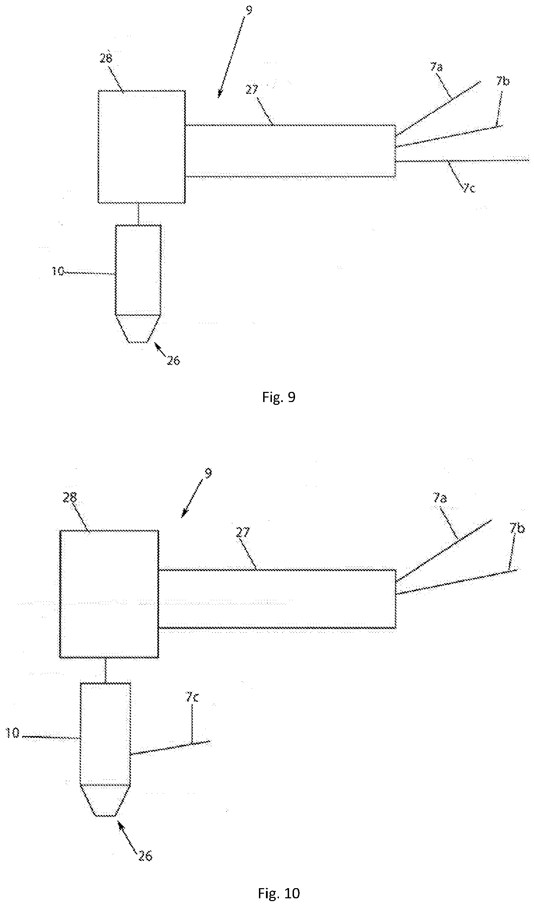

Die Fig. 9 und 10 zeigen stark vereinfacht den Extruder 9 des 3D-Druckgeräts 5. Der Extruder 9 verfügt über eine Extruder-Düse 10, welche eine verschließbare Austrittsöffnung 26 aufweist. Zusätzlich kann der Durchmesser der Austrittsöffnung 26 der Extruder-Düse 10 variiert werden. Dadurch können je nach Bedarf unterschiedliche Pflastersteine 2 und Muster gedruckt werden (vgl. Fig. 6).

Der Extruder 9 hat eine Mischkammer 27, in welche Zuleitungen 7a, 7b, 7c für verschiedene trockene oder flüssige Ausgangsstoffe münden, welche zu dem druckbaren Material 6 vermischt werden. In der gezeigten Ausführung weist der Extruder 9 überdies eine Entschleunigungskammer 28 auf, von welcher das druckbare Material 6 in die Extruder-Düse 10 geleitet wird. Die Extruder-Düse 10 appliziert das druckbare Material 6 entsprechend den Vorgaben der Steuerungssoftware auf die zu bedruckende Oberfläche.

In der Ausführung gemäß Fig. 10 ist eine Zuleitung 7c für Additive direkt mit der Extruder-Düse 10 verbunden. Damit können die Additive, wie beispielsweise Farbpigmente, getrennt von dem druckbaren Grundmaterial zugeführt werden.

In Fig. 11 sind verschiedene Ausführungen von Pflastersteinen 2 mit einer inneren Struktur 31 innerhalb von Außenkonturen 32 gezeigt. Die innere Struktur 31 weist Innenwände 33 auf, welche Hohlräume 34 voneinander trennen.

In Fig. 12 ist eine Ausführung eines Pflastersteines 2 mit einem inneren Hohlraum 35 gezeigt, welcher durch Topologieoptimierung errechnet wurde.

## Patentansprüche

1. Verfahren zur Herstellung einer Pflasterfläche (1) aus Pflasterelementen, insbesondere aus Pflastersteinen (2) oder Pflasterplatten, **dadurch gekennzeichnet, dass** die Pflasterelemente vor Ort mit einem 3D-Druckgerät (5) in einem 3D-Druck-Verfahren aus einem druckbaren Material (6) auf eine Oberfläche gedruckt werden.

2. Verfahren nach Anspruch 1, **dadurch gekennzeichnet, dass** das 3D-Druckgerät (5) einen Extruder (9) aufweist, durch den das druckbare Material (6) auf die Oberfläche aufgebracht wird.

3. Verfahren Anspruch 1 oder 2, **dadurch gekennzeichnet, dass** die Pflasterelemente jeweils aus zumindest einer ersten Schicht und einer zweiten Schicht aus dem druckbaren Material (6) gefertigt werden.

4. Verfahren nach Anspruch 3, **dadurch gekennzeichnet, dass** zunächst die ersten Schichten der Pflasterelemente gefertigt werden, bevor die zweiten Schichten der Pflasterelemente gefertigt werden.

5. Verfahren nach einem der Ansprüche 1 bis 4, **dadurch gekennzeichnet, dass** die Deckschichten (17) der Pflasterelemente mit höherer Auflösung als die darunterliegenden Schichten gedruckt werden.

6. Verfahren nach einem der Ansprüche 1 bis 5, **dadurch gekennzeichnet, dass** die Pflasterelemente mit einer inneren Struktur (31) mit Hohlräumen gedruckt werden.

7. Verfahren nach Anspruch 6, **dadurch gekennzeichnet, dass** die die innere Struktur (31) auf zumindest eine vollflächige untere Schicht gedruckt wird.

8. Verfahren nach einem der Ansprüche 1 bis 7, **dadurch gekennzeichnet, dass** die Pflasterelemente mit Bewehrungselementen versehen werden.

9. Verfahren nach einem der Ansprüche 1 bis 8, **dadurch gekennzeichnet, dass** Temperatursensoren, Niederschlagsmesssensoren und/oder Beschleunigungssensoren in den Pflasterelementen aufgenommen werden.

10. Verfahren nach einem der Ansprüche 1 bis 9, **dadurch gekennzeichnet, dass** Heizelemente in die Pflasterelemente aufgenommen werden.

11. Verfahren nach einem der Ansprüche 1 bis 10, **dadurch gekennzeichnet, dass** Drucksensoren in die Pflasterelemente aufgenommen werden, um eine Belastung der Pflasterelemente zu erkennen.

12. Verfahren nach einem der Ansprüche 1 bis 11, **dadurch gekennzeichnet, dass** Solarzellen oder Piezoelemente zur Stromgewinnung in die Pflasterelemente aufgenommen werden.

13. Verfahren nach einem der Ansprüche 1 bis 12, **dadurch gekennzeichnet, dass** die Pflasterelemente insbesondere an den Oberseiten mit Leuchtelementen, insbesondere LED-Elementen, versehen werden.

14. Verfahren nach einem der Ansprüche 1 bis 13, **dadurch gekennzeichnet, dass** mit dem 3D-Druckgerät (5) eine Bettungsschicht (4a), insbesondere aus zumindest einem von Splitt, Sand oder Mörtel, erstellt wird, auf welche das druckbare Material (6) gedruckt wird.

15. Verfahren nach einem der Ansprüche 1 bis 14, **dadurch gekennzeichnet, dass** vor dem Bedrucken der Oberfläche die Umgebung der Oberfläche, insbesondere die Struktur der Oberfläche, mit einem Sensor (29) vermessen wird.

## Claims

1. Method for producing a paved surface (1) from paving elements, in particular from paving stones (2) or paving slabs, **characterised in that** the paving elements are printed onto a surface on-site from a printable material (6) in a 3D printing process by means of a 3D printing device (5).

2. Method according to claim 1, **characterised in that** the 3D printing device (5) has an extruder (9), through which the printable material (6) is applied to the surface.

3. Method according to either claim 1 or claim 2, **characterised in that** the paving elements are each produced from at least one first layer and one second layer of the printable material (6).

4. Method according to claim 3, **characterised in that** the first layers of the paving elements are first produced before the second layers of the paving elements are produced.

5. Method according to any of claims 1 to 4, **characterised in that** the cover layers (17) of the paving elements are printed with a higher resolution than the underlying layers.

6. Method according to any of claims 1 to 5, **characterised in that** the paving elements are printed with an internal structure (31) comprising cavities.

7. Method according to claim 6, **characterised in that** the internal structure (31) is printed onto at least one full-surface lower layer.

8. Method according to any of claims 1 to 7, **characterised in that** the paving elements are provided with reinforcing elements.

9. Method according to any of claims 1 to 8, **characterised in that** temperature sensors, precipitation measuring sensors and/or acceleration sensors are incorporated into the paving elements.

10. Method according to any of claims 1 to 9, **characterised in that** heating elements are incorporated into the paving elements.

11. Method according to any of claims 1 to 10, **characterised in that** pressure sensors are incorporated into the paving elements in order to detect a load on the paving elements.

12. Method according to any of claims 1 to 11, **characterised in that** solar cells or piezoelectric elements are incorporated into the paving elements in order to generate electricity.

13. Method according to any of claims 1 to 12, **characterised in that** the paving elements are provided with lighting elements, in particular LED elements, in particular on the upper faces thereof.

14. Method according to any of claims 1 to 13, **characterised in that** a bedding layer (4a), in particular of at least one of stone chips, sand or mortar, onto which the printable material (6) is printed is produced by means of the 3D printing device (5).

15. Method according to any of claims 1 to 14, **characterised in that** the surroundings of the surface, in particular the structure of the surface, is measured by means of a sensor (29) before the surface is printed.

## Revendications

1. Procédé pour fabriquer une surface pavée (1) à partir d'éléments de pavage, en particulier à partir de pierres à paver (2) ou de dalles de pavage, **caractérisé en ce que** les éléments de pavage sont imprimés sur une surface à partir d'un matériau (6) imprimable lors d'un procédé d'impression 3D avec une imprimante 3D (5) sur site.

2. Procédé selon la revendication 1, **caractérisé en ce que** l'imprimante 3D (5) présente une extrudeuse (9), par laquelle le matériau (6) imprimable est appliqué sur la surface.

3. Procédé selon la revendication 1 ou 2, **caractérisé en ce que** les éléments de pavage sont fabriqués respectivement à partir d'au moins une première couche et d'une deuxième couche composées du matériau imprimable (6).

4. Procédé selon la revendication 3, **caractérisé en ce qu'**en premier lieu les premières couches des éléments de pavage sont fabriquées avant que les deuxièmes couches des éléments de pavage ne soient fabriquées.

5. Procédé selon l'une quelconque des revendications 1 à 4, **caractérisé en ce que** les couches de recouvrement (17) des éléments de pavage sont imprimées avec une résolution plus élevée que les couches situées en dessous.

6. Procédé selon l'une quelconque des revendications 1 à 5, **caractérisé en ce que** les éléments de pavage sont imprimés avec une structure intérieure (31) avec des cavités.

7. Procédé selon la revendication 6, **caractérisé en ce que** la structure intérieure (31) est imprimée sur au moins toute la surface d'une couche inférieure.

8. Procédé selon l'une quelconque des revendications 1 à 7, **caractérisé en ce que** les éléments de pavage sont pourvus d'éléments d'armature.

9. Procédé selon l'une quelconque des revendications 1 à 8, **caractérisé en ce que** des capteurs de température, des pluviomètres et/ou des capteurs d'accélération sont logés dans les éléments de pavage.

10. Procédé selon l'une quelconque des revendications 1 à 9, **caractérisé en ce que** des éléments de chauffage sont logés dans les éléments de pavage.

11. Procédé selon l'une quelconque des revendications 1 à 10, **caractérisé en ce que** des capteurs de pression sont logés dans les éléments de pavage pour identifier une contrainte sur les éléments de pavage.

12. Procédé selon l'une quelconque des revendications 1 à 11, **caractérisé en ce que** des cellules solaires ou des éléments piézoélectriques sont logés dans les éléments de pavage pour la production de courant.

13. Procédé selon l'une quelconque des revendications 1 à 12, **caractérisé en ce que** les éléments de pavage sont pourvus en particulier sur les côtés supérieurs d'éléments d'éclairage, en particulier d'éléments de DEL.

14. Procédé selon l'une quelconque des revendications 1 à 13, **caractérisé en ce qu'**est créée avec l'imprimante 3D (5) une couche d'assise (4a), en particulier à partir d'un au moins un parmi du gravier, du sable ou du mortier, sur laquelle le matériau imprimable (6) est imprimé.

15. Procédé selon l'une quelconque des revendications 1 à 14, **caractérisé en ce qu'**avant l'impression de la surface, l'environnement de la surface, en particulier la structure de la surface, est mesuré avec un capteur (29).
